# EUROPEAN PATENT APPLICATION

(11) **EP 3 502 297 A1**
(43) Date of publication of application: **26.06.2019**
(21) Application number: 18209292.4
(22) Date of filing: 29.11.2018
(51) Int. Cl.: C22C 38/02, C22C 38/04, C22C 38/06, C22C 38/50, C22C 38/58, B33Y 10/00, B22F 3/00, B22F 3/105, B23K 15/00, B23P 23/00, B33Y 80/00, B33Y 70/00, B33Y 30/00, B33Y 50/02, B23K 26/342, B23K 35/30, B23K 26/00, B23K 101/22, B23K 101/32, B23K 103/04, B32B 15/01

(54) **MULTI-MATERIAL TOOLING AND METHODS OF MAKING SAME**

(30) Priority: 29.11.2017 US 201762592045 P; 13.11.2018 US 201816189101
(71) Applicant: Lincoln Global, Inc., Santa Fe Springs, CA 90670 (US)
(72) Inventor: NARAYANAN, Badri K., Highland Heights, OH Ohio 44143 (US); MATTHEWS, William Thomas, Chesterland, OH Ohio 44026 (US); KOTTMAN, Michael A., Cleveland, OH Ohio 44102 (US)
(74) Representative: Grosse Schumacher Knauer von Hirschhausen

(57) **Abstract**

Multi-material tooling and methods of making multi-material tooling are provided. The multi-material tooling (100) includes a core (10) formed of a first material having a hardness (Rockwell C scale) of up to 30 HRC, and a shell layer (20) adjacent to the core. The shell layer (20) is formed of a second material having a hardness of 33 HRC to 70 HRC. The method of making multi-material includes depositing a first layer of a first material using an additive manufacturing technique to form a core (10). The first material that forms the core (10) has a hardness of up to 30 HRC. The method also includes depositing a second layer of a second material to form a shell layer (20) adjacent to the core. The second material that forms the shell layer has a hardness of 33 HRC to 70 HRC.

## Description

This application claims priority to and the benefit of U.S. Provisional Patent Application No. 62/592,045, filed November 29, 2017, the entire disclosure of which is incorporated herein by reference in full.

### FIELD

The invention relates to a method of making a multi-material tooling, and to a multi-material tooling, according to the preamble of claim 1, respectively 9.The general inventive concepts thus relate to tooling and methods of making tooling. More particularly, the general inventive concepts relate to multi-material tooling and methods of making multi-material tooling using additive manufacturing techniques.

### BACKGROUND

Tooling (e.g., dies, molds, machine tools, cutting tools, gauges, jigs, fixtures, patterns) is often made of a very hard material that is machined from a single piece of the material. Typically, there is significant variance in the stress and temperature experienced by different regions of the tooling during its use. Such hard tooling is prone to cracking due to the high carbon content (typically greater than 0.2%) of the hard material used to form the tooling.

Accordingly, there remains a need for tooling that is sufficiently hard yet more resistant to cracking.

### SUMMARY

The invention provides a method of making a multi-material tooling, and a multi-material tooling, according to claim 1 and 9 respectively. The general inventive concepts relate to multi-material tooling and methods of making multi-material tooling. To illustrate various aspects of the general inventive concepts, several exemplary embodiments of multi-material tooling and associated methods of making multi-material tooling are disclosed.

In one exemplary embodiment, a method of making a multi-material tooling is provided. The method includes depositing a first material using an additive manufacturing technique to form a core. The first material that forms the core has a hardness (Rockwell C scale) of up to 30 HRC. The method also includes depositing a second material to form a shell layer adjacent to the core. The second material that forms the shell layer has a hardness of 33 HRC to 70 HRC.

In one exemplary embodiment, a multi-material tooling is provided. The multi-material tooling includes a core comprising a first material having a hardness of up to 30 HRC, and a shell layer adjacent to the core. The shell layer comprises a second material having a hardness of 33 HRC to 70 HRC.

In one exemplary embodiment, a method of making a multi-material tooling is provided. The method includes depositing a first material using an additive manufacturing technique to form a core. The first material that forms the core has a hardness of up to 30 HRC. The method also includes depositing a second material to form a shell layer. The second material that forms the shell layer has a hardness of 33 HRC to 70 HRC. The method further includes depositing a third material using an additive manufacturing technique to form a transition layer positioned at least partially between the shell layer and the core. The third material is at least partially soluble with the first material and the second material.

Other aspects, advantages, embodiments, and features of the general inventive concepts will become apparent to those skilled in the art from the following detailed description, claims and accompanying drawings.

### BRIEF DESCRIPTION OF THE DRAWINGS

FIG. 1 is a schematic view of an embodiment of a multi-material tooling according to the present disclosure; and
FIG. 2 is a schematic view of an embodiment of a multi-material tooling according to the present disclosure.

### DETAILED DESCRIPTION

While the general inventive concepts are susceptible of embodiment in many different forms, there will be described herein in detail, specific embodiments thereof with the understanding that the present disclosure is to be considered as an exemplification of the principles of the general inventive concepts. Accordingly, the general inventive concepts are not intended to be limited to the specific embodiments illustrated herein.

The present disclosure describes exemplary multi-material tooling and methods of making multi-material tooling. The exemplary methods of the present disclosure utilize an additive manufacturing technique to form at least one portion of the multi-material tooling. In general, the multi-material tooling of the present disclosure may be used in hot and/or cold environments, and may be resistant to one or more of impact, wear, deformation, corrosion, thermal shock, and erosion. Exemplary applications of the multi-material tooling of the present disclosure include, but are not limited to, stamping, forging, or casting of metals via hot or cold processes, extruding metals or plastics, and processes that involve glass fibers or carbon fibers (e.g., fiber chopping operations).

As previously mentioned, conventional tooling is often made of a very hard material that is machined from a single piece of the material. In many applications, only a portion of the surface of the tooling may directly experience high stresses and extreme temperatures, while the remainder of the tool does not experience such high stresses and extreme temperatures. However, these very hard materials often lack toughness and are susceptible to chipping and cracking. The multi-material tooling and methods of the present disclosure address the drawbacks associated with conventional tooling by forming a core of the multi-material tooling using a first material that has a hardness (Rockwell C scale) of up to 30 HRC and forming a shell layer adjacent to the core using a second material that has a hardness of 33 HRC to 70 HRC. In general, the first material that forms the core has a higher toughness and is more ductile and less hard than the second material that forms the hard shell layer. Because the core has a higher ductility than the shell layer and the shell layer is harder than the core, the core puts the multi-material tooling into compressive stress such that the multi-material tooling is much less likely to crack or otherwise fail as compared to tooling formed entirely from a very hard material.

In one aspect of the present disclosure, a method of making a multi-material tooling is provided. The method includes depositing a first material using an additive manufacturing technique to form a core. The first material has a hardness of up to 30 HRC. The method also includes depositing a second material to form a shell layer adjacent to the core. The second material has a hardness of 33 HRC to 70 HRC.

Generally, the core of the multi-material tooling includes built up layers of the first material deposited in multiple passes performed by the additive manufacturing technique. A variety of additive manufacturing techniques may be used to deposit the first material to form the core. The additive manufacturing technique may be a powder-based technique that utilizes a powder feedstock, or a wire fed technique that utilizes a wire feedstock. Accordingly, the materials utilized in the methods of the present disclosure (i.e., first material, second material, and third material) may be in powder form and/or wire form.

Exemplary powder-based additive manufacturing techniques that may be used in the methods of the present disclosure include, but are not limited to, laser metal deposition, laser engineered net shaping, electron beam melting, powder-fed directed-energy deposition, selective laser sintering, and direct metal laser sintering. Powder-based additive manufacturing techniques build up articles in a layer-by-layer manner by sintering or melting a powder material using an energy source (e.g., laser beam, electron beam). In certain powder-based additive manufacturing techniques the powder material to be sintered or melted by the energy source is supplied by a reservoir and spread evenly over a build plate using a recoater arm to maintain the powder material at a desired level and to remove excess powder material extending above the desired level. The energy source sinters or melts a cross sectional layer of the article being built under control of a scanner system (e.g., galvo scanner). After a layer is complete, the build plate is lowered, and another layer of powder is spread over the build plate and the article being built, followed by successive sintering/melting of the powder material by the energy source. The process is repeated until the article is completely built up from the sintered/melted powder material. The energy source may be controlled by a computer system including a processor and a memory. The computer system may determine a scan pattern (*e.g.,* based on a computer aided design (CAD) model file) for each layer and control the energy source to sinter/melt the powder material according to the scan pattern.

In other powder-based additive manufacturing techniques, the article is built up in stacked layers by sintering or melting a powder material that is fed though a nozzle. In certain systems, the powder material may be fed along with a shield gas. As the powder material is fed, the powder material is sintered or melted into a melt pool by an energy source (*e.g.,* laser beam, electron beam). The article may be built on a substrate, which can be removed after the article is built. The melt pool formed when the energy source melts and/or sinters the powder material solidifies to form at least a portion of the article. Either the powder fed additive manufacturing apparatus, the substrate, or both may be lowered and/or moved to melt the powder material on any portion of the substrate and/or on the previously solidified portion of the article until the article is completely built up from a plurality of deposited layers. The energy source may be controlled by a computer system including a processor and a memory. The computer system may determine a predetermined path for each melt pool and subsequently solidified layer to be formed (*e.g.,* based on a computer aided design (CAD) model file), and control the energy source to sinter/melt the powder material according to a pre-programmed path.

Exemplary wire fed additive manufacturing techniques include, but are not limited to, laser wire metal deposition, wire arc additive manufacturing, electron beam additive manufacturing, and automated welding. In general, conventional wire fed additive manufacturing apparatus can be configured to build articles in a layer-by-layer manner by feeding a wire feedstock material, which is fed by a wire feeding apparatus and melting the wire feedstock material. Prior to physically building up the article, the additive manufacturing process often begins with the creation of a computer aided design (CAD) file to represent an image or drawing of a desired article. Using a computer, information about this article image file is extracted, such as by identifying information corresponding to individual layers of the article. Thus, to derive data needed to form an article by additive manufacturing, the article is conceptually sliced into many thin layers with the contours of each layer being defined by a plurality of line segments or data points connected to form polylines. The layer data may be converted to suitable tool path data, such as data that is manipulated by or in the form of computer numerical control (CNC) codes, such as G-codes, M-codes, or the like. These codes may be utilized to control the wire fed additive manufacturing apparatus for building an article layer-by-layer.

In a wire fed additive manufacturing technique, the wire feedstock material used to build the article is melted using an energy source (*e.g.,* an electron beam, a laser beam, an electrical arc). The building of the article may be performed on a build substrate. The energy source melts the wire feedstock material to form a melt pool, which solidifies to form at least a portion of the part. The wire fed additive manufacturing apparatus, the substrate, or both may be raised, lowered, or otherwise moved, while melting the wire feedstock material on any portion of the substrate, and/or on a previously solidified part until the article is completely built up from a plurality of layers formed from the melted wire feedstock material. The energy source is typically controlled by a computer system that includes a processor and a memory. The computer system determines a predetermined path for each melt pool and subsequently solidified layer to be formed, and the energy source melts the wire feedstock material according to a pre-programmed path.

In embodiments, the additive manufacturing technique used to deposit the first material to form the core comprises a powder-based additive manufacturing technique, a wire fed additive manufacturing technique, or a combination of a powder-based additive manufacturing technique and a wire fed additive manufacturing technique. Any of the previously mentioned powder-based additive manufacturing techniques and wire fed additive manufacturing techniques may be used in the methods of the present disclosure to deposit the first material to form the core of the multi-material tooling.

In embodiments, the methods of the present disclosure may further comprise applying a subtractive manufacturing technique after depositing the first material to form the core. In embodiments, the methods of the present disclosure may further comprise applying a subtractive manufacturing technique after depositing the first material prior to completely forming the core (*e.g.,* after one or more layers of the first material is deposited, after each layer of the first material is deposited). A variety of subtractive manufacturing techniques may be utilized in the methods of the present disclosure. Exemplary subtractive manufacturing techniques include, but are not limited to, milling, turning, and drilling. Such subtractive manufacturing techniques are well known to those skilled in the art and may be carried out using, for example, a conventional CNC machine. Accordingly, in embodiments of the present disclosure that include the application of a subtractive manufacturing technique, the subtractive manufacturing technique comprises milling, turning, drilling, or combinations thereof.

The methods of the present disclosure also include depositing a second material to form a shell layer adjacent to at least a portion of the core. In embodiments, the shell layer may be directly adjacent to the core, such as by depositing the second material directly onto a portion of the core. In embodiments, the shell layer may be indirectly adjacent to the core, such as by depositing the second material onto a material (*e.g.,* a transition layer) that was previously deposited onto a portion of the core. In embodiments, the shell layer may have a portion that is directly adjacent to the core and a portion that is indirectly adjacent to the core.

A variety of techniques may be utilized to deposit the second material to form the shell layer of the multi-material tooling of the present disclosure. In embodiments, the second material may be deposited using an additive manufacturing technique. In embodiments, the additive manufacturing technique used to deposit the second material to form the shell layer comprises a powder-based additive manufacturing technique, a wire fed additive manufacturing technique, or a combination of a powder-based additive manufacturing technique and a wire fed additive manufacturing technique. Any of the previously mentioned powder-based additive manufacturing techniques and wire fed additive manufacturing techniques may be used in the methods of the present disclosure to deposit the second material to form the shell layer of the multi-material tooling.

In embodiments, the second material may be deposited using a thermal spray process. Exemplary thermal spray processes suitable for use in the methods of the present disclosure include, but are not limited to, plasma spraying, detonation spraying, wire arc spraying, flame spraying, high-velocity oxygen fuel spraying, high-velocity air fuel spraying, warm spraying, and cold spraying.

In embodiments, the methods of the present disclosure may further comprise applying a subtractive manufacturing technique after depositing the second material to form the shell layer. In embodiments, the methods of the present disclosure may further comprise applying a subtractive manufacturing technique after depositing the second material prior to completely forming the shell layer (*e.g.,* after one or more layers of the second material is deposited, after each layer of the second material is deposited). Any one or more of the subtractive manufacturing techniques previously discussed may be used to remove or finish a portion of the shell layer.

As briefly mentioned, the first material that forms the core of the multi-material tooling has a higher toughness and is more ductile and less hard than the second material, which forms the hard shell layer of the multi-material tooling. Thus, the core puts the multi-material tooling into compressive stress such that the multi-material tooling is much less likely to crack as compared to tooling formed entirely from a very hard material. In addition, cooling or heating processes may be utilized to promote desired mechanical properties of the multi-material tooling. For example, the melt pool cooling rates may be controlled or modified when depositing the first material and/or the second material. Examples of methods for controlling cooling rates include, but are not limited to, the application of blown air/forced convection between passes/layer deposition, and use of a copper block or roller that may or may not be water-cooled after deposition. Furthermore, the core and/or the completed multi-material tooling may be subjected to post-fabrication heat treatments, cooling treatments, or both heat treatments and cooling treatments. Accordingly, in embodiments, the methods of the present disclosure may further comprise a cooling treatment, a heat treatment, or both a cooling treatment and a heat treatment, and such cooling treatment and/or heat treatment may be performed during fabrication of the multi-material tooling, after the core is fabricated, and/or after the entire multi-material tooling is fabricated.

In another aspect of the present disclosure, a method of making a multi-material tooling is provided. The method includes depositing a first material using an additive manufacturing technique to form a core. The first material has a hardness of up to 30 HRC. In addition, the method includes depositing a second material to form a shell layer. The second material has a hardness of 33 HRC to 70 HRC. The method also includes depositing a third material using an additive manufacturing technique to form a transition layer positioned at least partially between the shell layer and the core. The third material is at least partially soluble with the first material and the second material.

The previous description regarding the deposition of the first material to form the core of the multi-material tooling and the previous description regarding the deposition of the second material to form the shell layer of the multi-material tooling apply equally to this aspect of the present disclosure. In addition, any one or more of the additional processing steps previously described (*e.g.,* applying a subtractive manufacturing technique, heat treatments, cooling treatments) may be utilized with respect to the formation of the transition layer in this aspect of the present disclosure.

As mentioned above, the methods of the present disclosure may also include depositing a third material using an additive manufacturing technique to form a transition layer positioned at least partially between the shell layer and the core. In embodiments, the third material may be deposited onto at least a portion of the core to form the transition layer, and the second material may be deposited onto at least a portion of the transition layer to form the shell layer of the multi-material tooling. Because the third material is at least partially soluble with the first material and the second material, the third material bonds well with the first material and the second material.

In embodiments, the additive manufacturing technique used to deposit the third material to form the transition layer comprises a powder-based additive manufacturing technique, a wire fed additive manufacturing technique, or a combination of a powder-based additive manufacturing technique and a wire fed additive manufacturing technique. Any of the previously mentioned powder-based additive manufacturing techniques and wire fed additive manufacturing techniques may be used in the methods of the present disclosure to deposit the third material onto at least a portion of the core to form the transition layer of the multi-material tooling. In embodiments, the additive manufacturing technique used to deposit the third material is the same as the additive manufacturing technique used to deposit the first material. In embodiments, the additive manufacturing technique used to deposit the third material is different from the additive manufacturing technique used to deposit the first material.

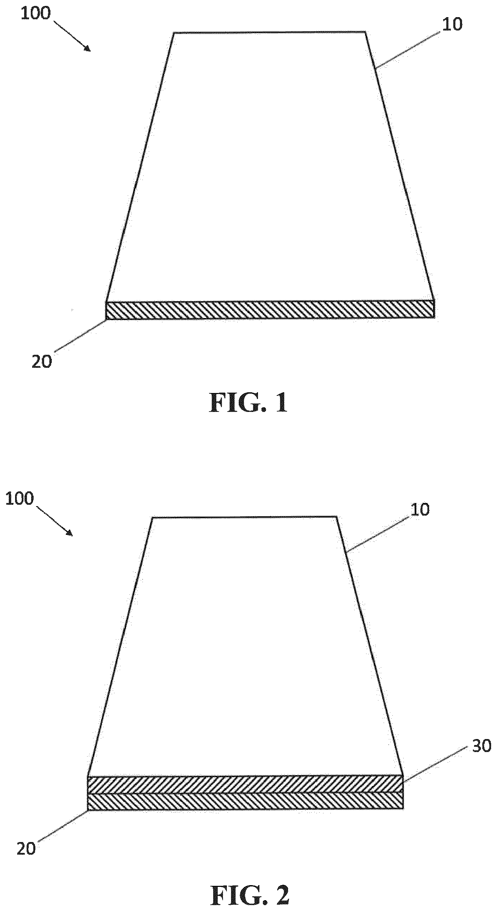

In another aspect of the present disclosure, a multi-material tool is provided. Referring now to FIG. 1, a multi-material tooling 100 comprises a core 10 comprising a first material having a hardness of up to 30 HRC and a shell layer 20 adjacent to at least a portion of the core 10. The shell layer 20 comprises a second material having a hardness of 33 HRC to 70 HRC. Because the core 10 of the multi-material tooling 100 is formed using an additive manufacturing technique, as described above, the core 10 can be fabricated to have complex geometries and finely detailed features that would otherwise require extensive secondary processing, which could make such tooling cost prohibitive. Using the methods of the present disclosure, the core 10 can be fabricated to a near net shape of the multi-material tooling 100. Generally, the core 10 of the multi-material tooling 100 comprises a majority of the multi-material tooling 100. Although FIG. 1 illustrates the shell layer 20 adjacent or otherwise joined to one surface of the core 10, it is contemplated that the shell layer 20 may be adjacent or otherwise joined more than one surface, including on all surfaces, of the core 10 such that the shell layer 20 covers or coats the entire core 10.

The shell layer 20 of the multi-layer tooling 100 may correspond to portions of the multi-material tooling 100 that experience high stresses, high loads, high impacts, and extreme temperatures when performing a tooling operation (e.g., cutting, stamping, molding, forging, casting, pressing, extruding). In embodiments, the shell layer 20 may have a thickness of up to 2.54 cm, including from 0.039 cm to 2.54 cm, from 0.079 cm to 2.54 cm, from 0.15 cm to 2.54 cm, from 0.31 cm to 2.54 cm, from 0.63 cm to 2.54 cm, from 1.27 cm to 2.54 cm, and also including from 1.9 cm to 2.54 cm. In embodiments, the shell layer 20 may have a thickness of 0.039 cm to 2.54 cm, from 0.039 cm to 1.9 cm, from 0.039 cm to 1.27 cm, from 0.039 cm to 0.63 cm, from 0.039 cm to 0.31 cm, from 0.039 cm to 0.15 cm, and also including from 0.039 cm to 0.079 cm.

In accordance with the present disclosure, the core 10 of the multi-material tooling 100 comprises a first material having a hardness of up to 30 HRC. In embodiments, the first material has a hardness of 15 HRC to 30 HRC, including from 18 HRC to 30 HRC, from 20 HRC to 30 HRC, and also including from 25 HRC to 30 HRC. It should be understood that the first material may comprise one or more materials so long as the hardness of each material is no greater than 30 HRC. Furthermore, the hardness values described herein correspond to the hardness of a material in its finished state (*e.g.,* as-deposited or after post-fabrication heat treatments).

In general, the first material is easy to deposit via additive manufacturing techniques, tough, ductile, able to withstand loading and shock, and resistant to cracking. One example of a class of materials suitable for use as the first material in accordance with the present disclosure includes, but is not limited to, low alloy steels. In general, a low alloy steel contains less than 10 wt% alloying elements and at least 90 wt% Fe. One example of a low alloy steel suitable for use as the first material in accordance with the present disclosure has a chemical composition of about 0.5 wt% C, about 1.5 wt% Mn, about 0.4 wt% Si, about 1.9 wt% Ni, about 0.4 wt% Mo, about 0.1 wt% Cu, about 0.02 wt% Ti, and the balance being Fe and incidental impurities. Low alloy steels generally exhibit high strength (*e.g.,* an ultimate tensile strength of greater than 552 MPa) and high toughness (*e.g.,* greater than 27 N-m of Charpy V-Notch toughness at -17.78 °C), which makes low alloy steels particularly suitable for use as the first material to form the core of the multi-material tooling of the present disclosure.

In accordance with the present disclosure, the shell layer 20 of the multi-material tooling 100 comprises a second material having a hardness of 33 HRC to 70 HRC. In embodiments, the second material has a hardness of 35 HRC to 70 HRC, including from 38 HRC to 68 HRC, from 40 HRC to 66 HRC, from 45 HRC to 66 HRC, from 50 HRC to 65 HRC, and also including from 50 HRC to 60 HRC. It should be understood that the second material may comprise one or more materials so long as the hardness of each material is from 33 HRC to 70 HRC.

In general, the second material is a hard material that may be wear-resistant, abrasion-resistant, corrosion-resistant, temperature-resistant, or combinations thereof, and is well-suited for performing the particular function of the multi-material tooling 100 (*e.g.,* cutting, stamping, molding, forging, casting, pressing, extruding). Exemplary materials suitable for use as the second material in accordance with the present disclosure include, but are not limited to, a nanostructured steel, a chromium carbide alloy, a martensitic stainless steel, a cobalt alloy, a maraging steel, and a tool steel.

In embodiments, the second material may comprise a martensitic stainless steel. Examples of martensitic stainless steels suitable for use as the second material include, but are not limited to, 410 stainless steel and 420 stainless steel. The 410 stainless steel and the 420 stainless steel may be in powder form or wire form.

In embodiments, the second material may comprise a cobalt alloy. The cobalt alloy for use as the second material may have a high cobalt content (*e.g.,* > 20 wt% Co) such as cobalt 1 alloy, cobalt 6 alloy, cobalt 12 alloy, and cobalt 21 alloy. The chemical compositions for such cobalt alloys in their undiluted, as-deposited form are listed below in Table 1. The cobalt alloys may be in powder form or wire form.

**TABLE 1: Undiluted, As-Deposited Cobalt Alloy Compositions, wt.%**

| **Ingredient** | **Cobalt 1** | **Cobalt 6** | **Cobalt 12** | **Cobalt 21** |
|---|---|---|---|---|
| Carbon | 1.7 - 3 | 0.7 - 1.4 | 1.2 - 2 | 0.15 - 0.4 |
| Nickel | ≤ 3 | ≤ 3 | ≤ 3 | 1.5 - 4 |
| Chromium | 25 - 33 | 25 - 32 | 25 - 32 | 25 - 30 |
| Manganese | ≤ 2 | ≤ 2 | ≤ 2 | ≤ 2 |
| Silicon | ≤ 2 | ≤ 2 | ≤ 2 | ≤ 1.5 |
| Molybdenum | ≤ 1 | ≤ 1 | ≤ 1 | 4.5 - 7 |
| Iron | ≤ 5 | ≤ 5 | ≤ 5 | ≤ 5 |
| Tungsten | 11 - 14 | 3 - 6 | 7 - 10 | ≤ 0.5 |
| Incidental Impurities | ≤ 1 | ≤ 1 | ≤ 1 | ≤ 1 |
| Cobalt | balance | balance | balance | balance |

In embodiments, the second material may comprise a maraging steel. Exemplary maraging steels suitable for use as the second material in accordance with the present disclosure include, but are not limited to, Grade 250 maraging steel, Grade 300 maraging steel, and Grade 350 maraging steel. The chemical composition for such maraging steels are provided in Table 2 below. The maraging steels may be in powder form or wire form.

**TABLE 2: Maraging Steels, wt.%**

| **Ingredient** | **Grade 250** | **Grade 300** | **Grade 350** |
|---|---|---|---|
| Nickel | 17 - 19 | 18 - 19 | 18 - 19 |
| Cobalt | 7 - 8.5 | 8.5 - 9.5 | 11.5 - 12.5 |
| Molybdenum | 4.6 - 5.2 | 4.6 - 5.2 | 4.6 - 5.2 |
| Titanium | 0.3 - 0.5 | 0.5 - 0.8 | 1.3 - 1.6 |
| Aluminum | 0.05 - 0.15 | 0.05 - 0.15 | 0.05 - 0.15 |
| Iron | balance | balance | balance |

In embodiments, the second material may comprise a tool steel. Exemplary tool steels suitable for use as the second material in accordance with the present disclosure include, but are not limited to, H-13 tool steel and P20 tool steel. The tool steels may be in powder form or wire form.

Referring now to FIG. 2, an embodiment of a multi-material tooling 100 is illustrated in accordance with another aspect of the present disclosure. As seen in FIG. 2, a multi-material tooling 100 comprises a core 10, a shell layer 20, and a transition layer 30 positioned at least partially between the core 10 and the shell layer 20. The core 10 comprises a first material having a hardness of up to 30 HRC and the shell layer 20 comprises a second material having a hardness of 35 HRC to 70 HRC, each of which may correspond to any of the previously described embodiments. Although FIG. 2 illustrates the transition layer 30 deposited and positioned on one surface of the core 10 and the shell layer 20 deposited and positioned on one surface of the transition layer 30, it is contemplated that the transition layer 30 may be deposited or otherwise positioned on more than one surface, including on all surfaces, of the core 10 and that the shell layer 20 may be deposited or otherwise positioned on more than one surface, including on all surfaces, of the transition layer 30. It is also contemplated that the transition layer 30 may be deposited or otherwise positioned on only a portion of the core 10 and that the shell layer 20 may be deposited or otherwise positioned on all outer surfaces of the transition layer 30 such that the shell layer 20 covers or coats all outer surfaces of the transition layer 30.

The transition layer 30 of the multi-material tooling 100 functions to efficiently transfer energy (*e.g.,* loads) from the shell layer 20 to the core 10, which reduces the likelihood of the shell layer 20 cracking or otherwise failing when the multi-material tooling 100 performs a tooling operation. In embodiments, the transition layer 30 may have a thickness of up to 2.54 cm, including from 0.039 cm to 2.54 cm, from 0.079 cm to 2.54 cm, from 0.15 cm to 2.54 cm, from 0.31 cm to 2.54 cm, from 0.63 cm to 2.54 cm, from 1.27 cm to 2.54 cm, and also including from 1.9 cm to 2.54 cm. In embodiments, the transition layer 30 may have a thickness of 0.039 cm to 2.54 cm, from 0.039 cm to 1.9 cm, from 0.039 cm to 1.27 cm, from 0.039 cm to 0.63 cm, from 0.039 cm to 0.31 cm, from 0.039 cm to 0.15 cm, and also including from 0.039 cm to 0.079 cm.

In accordance with the present disclosure, the transition layer 30 of the multi-material tooling 100 comprises a third material. The third material comprises a material that is at least partially soluble with both the first material and the second material. One example of a class of material suitable for use as the third material in accordance with the present disclosure includes, but is not limited to, austenitic stainless steels. Exemplary austenitic stainless steels suitable for use as the third material in accordance with the present disclosure include, but are not limited to, 309L stainless steel, 309LSi stainless steel, 316L stainless steel, and 316LSi stainless steel.

All percentages, parts, and ratios as used herein, are by weight of the total composition, unless otherwise specified. All such weights as they pertain to listed ingredients are based on the active level and, therefore, do not include solvents, impurities, or byproducts that may be included in commercially available materials, unless otherwise specified.

All references to singular characteristics or limitations of the present disclosure shall include the corresponding plural characteristic or limitation, and vice versa, unless otherwise specified or clearly implied to the contrary by the context in which the reference is made.

All combinations of method or process steps as used herein can be performed in any order, unless otherwise specified or clearly implied to the contrary by the context in which the referenced combination is made.

All ranges and parameters, including but not limited to percentages, parts, and ratios, disclosed herein are understood to encompass any and all sub-ranges assumed and subsumed therein, and every number between the endpoints. For example, a stated range of "1 to 10" should be considered to include any and all subranges between (and inclusive of) the minimum value of 1 and the maximum value of 10; that is, all subranges beginning with a minimum value of 1 or more (*e.g.,* 1 to 6.1), and ending with a maximum value of 10 or less (*e.g.,* 2.3 to 9.4, 3 to 8, 4 to 7), and finally to each number 1, 2, 3, 4, 5, 6, 7, 8, 9, and 10 contained within the range.

The methods and compositions of the present disclosure can comprise, consist of, or consist essentially of the essential elements and limitations of the disclosure as described herein, as well as any additional or optional ingredients, components, or limitations described herein.

The compositions of the present disclosure may also be substantially free of any optional or selected essential ingredient or feature described herein, provided that the remaining composition still contains all of the required ingredients or features as described herein. In this context, and unless otherwise specified, the term "substantially free" means that the selected composition contains less than a functional amount of the optional ingredient, typically less than 0.1% by weight, and also including zero percent by weight of such optional or selected essential ingredient.

To the extent that the terms "include," "includes," or "including" are used in the specification or the claims, they are intended to be inclusive in a manner similar to the term "comprising" as that term is interpreted when employed as a transitional word in a claim. Furthermore, to the extent that the term "or" is employed (*e.g.,* A or B), it is intended to mean "A or B or both A and B." When the Applicant intends to indicate "only A or B but not both," then the term "only A or B but not both" will be employed. Thus, use of the term "or" herein is the inclusive, and not the exclusive use. In the present disclosure, the words "a" or "an" are to be taken to include both the singular and the plural. Conversely, any reference to plural items shall, where appropriate, include the singular.

In some embodiments, it may be possible to utilize the various inventive concepts in combination with one another. Additionally, any particular element recited as relating to a particularly disclosed embodiment should be interpreted as available for use with all disclosed embodiments, unless incorporation of the particular element would be contradictory to the express terms of the embodiment. Additional advantages and modifications will be readily apparent to those skilled in the art. Therefore, the disclosure, in its broader aspects, is not limited to the specific details presented therein, the representative apparatus, or the illustrative examples described. Accordingly, departures may be made from such details without departing from the spirit or scope of the general inventive concepts.

The scope of the general inventive concepts presented herein are not intended to be limited to the particular exemplary embodiments shown and described herein. From the disclosure given, those skilled in the art will not only understand the general inventive concepts and their attendant advantages, but will also find apparent various changes and modifications to the methods and compositions disclosed. It is sought, therefore, to cover all such changes and modifications as fall within the spirit and scope of the general inventive concepts, as described and/or claimed herein, and any equivalents thereof.

The scope of the claims presented herein are not limited in any way by the description and exemplary embodiments of the present disclosure. In addition, the ordinary meanings of the terms used throughout the present disclosure are not limited in any way by the description and exemplary embodiments presented herein. All of the terms presented throughout the present disclosure retain all of their many potential ordinary meanings.

### REFERENCE NUMERALS

- 10: core
- 20: shell layer
- 30: transition layer
- 100: multi-material tooling

## Claims

1. A method of making multi-material tooling (100), the method comprising:
depositing a first material using an additive manufacturing technique to form a core (10), wherein the first material has a hardness of up to 30 HRC;
**characterized by** depositing a second material to form a shell layer (20) adjacent to at least a portion of the core (10), wherein the second material has a hardness of 33 HRC to 70 HRC.

2. The method according to claim 1, wherein the first material comprises a low alloy steel.

3. The method according to claim 1 or 2, wherein the second material comprises one or more of a nanostructured steel, a chromium carbide alloy, a cobalt alloy, a martensitic stainless steel, a maraging steel, and a tool steel.

4. The method according to one of the claims 1 to 3, wherein the first material has a hardness of 15 HRC to 30 HRC; and/or wherein the second material has a hardness of 38 HRC to 68 HRC.

5. The method according to one of the claims 1 to 4, wherein the second material is deposited using an additive manufacturing technique, a thermal spray process, and combinations thereof.

6. The method according to one of the claims 1 to 5, further comprising depositing a third material using an additive manufacturing technique to form a transition layer (30) positioned at least partially between the shell layer (20) and the core (10).

7. The method according to claim 7, wherein the third material comprises an austenitic stainless steel.

8. The method of claim 6 or 7, wherein the third material is partially or fully soluble with the first and/or the second material.

9. A multi-material tooling (100) comprising:
a core comprising a first material having a hardness of up to 30 HRC;
**characterized by** a shell layer (20) adjacent to at least a portion of the core (10), wherein the shell layer (20) comprises a second material having a hardness of 33 HRC to 70 HRC.

10. The multi-material tooling according to claim 9, wherein the first material comprises a low alloy steel; and/or wherein the second material comprises one or more of a nanostructured steel, a chromium carbide alloy, a cobalt alloy, a martensitic stainless steel, a maraging steel, and a tool steel.

11. The multi-material tooling according to claim 9 or 10, wherein the first material has a hardness of 15 HRC to 30 HRC; and/or wherein the second material has a hardness of 38 HRC to 68 HRC.

12. The multi-material tooling according to one of the claims 9 to 11, further comprising a transition layer (30) positioned at least partially between the shell layer (20) and the core (10), wherein the transition layer (30) comprises a third material.

13. The multi-material tooling according to claim 12, wherein the third material comprises an austenitic stainless steel; and/or wherein the third material is partially or fully soluble with the first and/or second material..

14. A method of making multi-material tooling (100), in particular according to one of the preceding claims, the method comprising:
depositing a first material using an additive manufacturing technique to form a core (10), wherein the first material has a hardness of up to 30 HRC;
depositing a second material to form a shell layer (20), wherein the second material has a hardness of 33 HRC to 70 HRC; and
depositing a third material using an additive manufacturing technique to form a transition layer (30) positioned at least partially between the shell layer (20) and the core (10), wherein the third material is at least partially soluble with the first material and the second material.

15. The method according to claim 14, wherein the first material comprises a low alloy steel; and/or wherein the second material comprises one or more of a nanostructured steel, a chromium carbide alloy, a cobalt alloy, a martensitic stainless steel, a maraging steel, and a tool steel; and/or wherein the first material has a hardness of 15 HRC to 30 HRC; and/or wherein the third material comprises an austenitic stainless steel.
